# DEMANDE DE BREVET EUROPEEN

(11) **EP 0 761 985 A1**
(43) Date de publication de la demande: **12.03.1997**
(21) Numéro de dépôt: 96401880.8
(22) Date de dépôt: 02.09.1996
(51) Int. Cl.: F16B 5/02, F16F 1/373, B62D 29/04, B60R 19/26

(54) **Dispositif de fixation à au moins deux degrés de liberté et son application notamment aux véhicules automobiles terrestres**

(30) Priorité: 04.09.1995 FR 9510348
(71) Demandeur: ECIA - EQUIPEMENTS ET COMPOSANTS POUR L'INDUSTRIE AUTOMOBILE, F-25400 Audincourt (FR)
(72) Inventeur: Baume, Hugues, 25200 Montbeliard (FR)
(74) Mandataire: Moncheny, Michel

(57) **Abrégé**

Le dispositif pour réunir l'un à l'autre deux éléments (10), qui comprend notamment deux passages (11) dont l'un est pourvu sur l'une (101) de ses faces (101, 102) d'une cuvette (111) avec un fond (1110), une vis (20) avec une tête (21) qui présente une portée (211) et avec une tige (22) au moins partiellement filetée, un écrou (30) et une entretoise (40) avec un alésage (41). Ce fond (1110) et cette portée (211) ont des configurations sphéroïdales complémentaires, les passages (11) ont une taille supérieure à la taille de la tige (22), l'entretoise (40) est faite en un matériau déformable et relativement élastique, et un anneau (50) fait en un matériau déformable et relativement élastique est interposé entre l'écrou (30) et l'élément (10) qui lui fait face.

## Description

La présente invention concerne les dispositifs de fixation à au moins deux degrés de liberté destinés à réunir l'un à l'autre deux éléments localement distants, et à l'application d'un dispositif de ce type notamment à un véhicule automobile terrestre pour monter par exemple un élément de carrosserie tel un pare-chocs ou analogue sur la caisse ou structure du véhicule.

Dans de nombreux secteurs de l'industrie, il est nécessaire de réunir l'un à l'autre deux éléments localement distants de manière à normalement les maintenir relativement fixes tout en leur permettant toutefois, dans des circonstances exceptionnelles, de se déplacer relativement l'un à l'autre notamment en translation selon par exemple au moins deux degrés de liberté, lorsque l'un de ces éléments est soumis à une sollicitation qui tend à le rapprocher de l'autre élément et/ou à le faire glisser approximativement dans son plan.

Ce type de situation se rencontre par exemple à bord des véhicules automobiles terrestres pour le montage des pare-chocs avant et/ou arrière sur la coque ou structure du véhicule.

Pour maintenir et réunir l'un à l'autre de tels éléments qui sont localement distants, on utilise souvent au moins une entretoise, tampon ou similaire en un matériau relativement élastique intercalé entre les deux éléments qui sont réunis à l'aide d'au moins un couple vis et écrou ou similaire, dont la vis est engagée dans le tampon et dans deux passages oblongs, pratiquement en vis-à-vis, qui transpercent chacun de ces éléments d'une face à l'autre de ces derniers. L'axe d'un passage oblong est pratiquement perpendiculaire à la direction de l'axe longitudinal de la vis et de l'entretoise. Pour que la tête de la vis ne fasse pas saillie sur la face de l'élément contre lequel elle repose, cette face de l'élément est habituellement pourvue d'un lamage ou similaire lui aussi le plus souvent oblong, qui permet de "noyer" la tête de la vis dans l'élément tout en autorisant un déplacement de l'élément dans son plan relativement à l'autre élément.

Si une telle solution donne relativement satisfaction pour un déplacement parallèle à l'axe longitudinal de la vis et rapprochant l'un de l'autre les éléments, elle nécessite un jeu important en particulier entre la tête de la vis et le lamage dans lequel elle est placée pour un déplacement d'un élément parallèlement à son propre plan, ce qui esthétiquement est disgracieux, et en aucun cas n'autorise un degré de liberté en rotation.

Le but de l'invention est de remédier aux inconvénients brièvement rappelés du type de dispositif de fixation évoqué auparavant.

Le dispositif de fixation selon l'invention à au moins deux degrés de liberté notamment en translation selon deux directions orthogonales entre elles, pour réunir l'un à l'autre deux éléments localement distants, est relativement esthétique car il procure un minimum de jeu apparent et de plus ne nuit pas aux qualités aérodynamiques qui sont le cas échéant nécessaires.

L'invention a pour objet un dispositif de fixation à au moins deux degrés de liberté notamment en translation selon deux directions orthogonale entre elles, pour réunir l'un à l'autre deux éléments localement distants, qui comprend notamment deux passages transperçant chacun l'un de ces éléments d'une face à l'autre et dont l'un est pourvu sur l'une de ses faces d'une cuvette avec un fond entourant ce passage, une vis avec une tête qui présente une portée destinée à reposer sur le fond de la cuvette et avec une tige au moins partiellement filetée destinée à s'engager dans ces passages, un écrou destiné à se visser sur la tige filetée et à coopérer avec celui des éléments opposé à celui pourvu de la cuvette, et une entretoise avec un alésage la transperçant destinée à s'enfiler sur la tige filetée et à s'insérer entre les deux éléments pour les maintenir à distance. Ce dispositif est remarquable en ce que le fond et la portée ont des configurations sphéroïdales complémentaires, en ce que les passages ont une taille supérieure à la taille de la tige filetée qui y est engagée mesurée selon au moins une direction perpendiculaire à l'axe longitudinal de la tige, en ce que l'entretoise est faite en un matériau déformable et relativement élastique, et en ce qu'un anneau fait en un matériau déformable et relativement élastique est destiné à être enfilé sur la tige et à être interposé entre l'écrou et l'élément qui lui fait face.

L'invention a aussi pour objet l'application d'un dispositif du type indiqué auparavant à un véhicule automobile terrestre où l'un des éléments est une pièce de carrosserie ou analogue et l'autre des éléments est une coque ou structure du véhicule.

D'autres caractéristiques de l'invention apparaîtront à la lecture de la description et des revendications qui suivent ainsi qu'à l'examen des figures du dessin donné seulement à titre d'exemple, où :
La figure 1 est une vue schématique en coupe longitudinale d'un mode de réalisation d'un dispositif selon l'invention à l'état initial;
La figure 2 est une vue analogue à celle de la figure 1 lorsqu'un des éléments est soumis à une sollicitation et où le dispositif est à l'état déformé;
La figure 3 est une vue partielle en bout de détail d'un constituant d'un dispositif selon l'invention;
et la figure 4 est une vue en demi-élévation demi-coupe d'un mode de réalisation d'un constituant d'un dispositif selon l'invention.

Les dispositifs de fixation à au moins deux degrés de liberté, notamment en translation selon deux directions orthogonales entre elles, pour réunir l'un à l'autre deux éléments localement distants, de même que les véhicules automobiles terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit on utilise toujours un même numéro de référence pour identifier un élément homologue quel que soit le mode de réalisation ou sa variante d'exécution.

Pour la commodité de l'exposé, on décrira successivement chacun des constituants d'un dispositif selon l'invention avant d'en exposer la fabrication au besoin, la mise en oeuvre et le fonctionnement.

Dans ce qui suit on décrira le dispositif selon l'invention dans son application spécifique à l'industrie automobile mais il est clair que l'invention n'est pas limitée à cette seule application.

Un dispositif de fixation selon l'invention à au moins deux degrés de liberté notamment en translation selon deux directions orthogonales entre elles, est destiné à réunir l'un à l'autre deux éléments 10 localement distants.

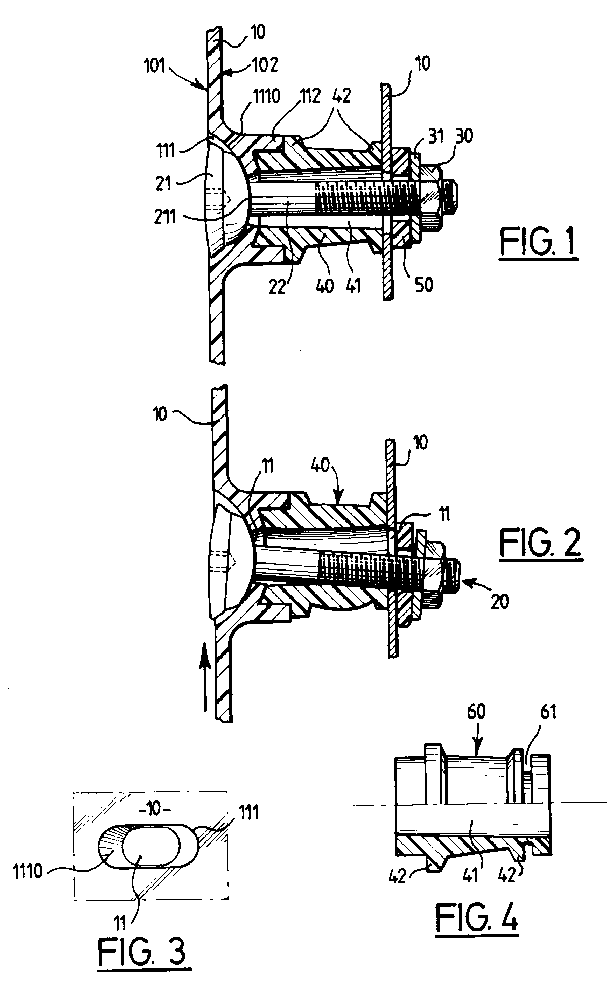

Chacun de ces éléments 10 présente deux faces opposées 101 et 102, et est transpercé d'un passage 11 d'une des faces à l'autre. La section droite de ces passages est circulaire par exemple ou autre. L'un au moins de ces passages est pourvu sur l'une des faces d'un élément d'une cuvette 111 avec un fond 1110 entourant ce passage. S'il y a lieu et de préférence, au moins la face de celui des éléments opposée à celle qui est munie de la cuvette, est pourvue d'un logement 112 sur lequel on reviendra par la suite. Le fond 1110 a une configuration sphéroïdale et est de préférence concave. S'il y a lieu et pour les raisons qui apparaîtront par la suite, cette cuvette vue en bout au lieu d'avoir un contour circulaire, a un contour oblong avec deux parties opposées courbes par exemple en arc de cercle, réunies par deux parties rectilignes en méplat, comme clairement illustré sur la figure 3.

Une vis 20 présente une tête 21 avec une portée 211 postérieure à configurations sphéroïdales de préférence convexe, et une tige 22 au moins partiellement filetée.

Les configurations sphéroïdales données au fond de la cuvette et à la portée postérieure de la tête de vis sont complémentaires de manière à constituer une rotule ou similaire. Il est clair que les concavité et convexité du fond et de la portée peuvent être permutées.

La tige 22 de la vis 20 est destinée à être enfilée dans les passages 11. La taille des passages est supérieure à la taille de la tige qui y est engagée, mesurée selon au moins une direction perpendiculaire à l'axe longitudinal de la tige.

Un écrou 30 est destiné à se visser sur la partie filetée de la tige 22 et à coopérer avec celui des éléments 10 qui est opposé à celui qui est pourvu de la cuvette 111. S'il y a lieu une rondelle 31 sert d'appui à l'écrou.

Une entretoise 40 transpercée d'un alésage 41 est destinée à être enfilée de préférence avec jeu sur la tige 22 et à être insérée entre les deux éléments 10 pour les maintenir à distance. S'il y a lieu cette entretoise est munie sur sa périphérie d'au moins une collerette 42 destinée à prendre appui sur le bord du logement 112 dans lequel est partiellement engagée l'entretoise comme illustré sur les figures 1 et 2. Cette entretoise 40 est faite en un matériau déformable et relativement élastique par exemple en un élastomère de dureté Shore appropriée.

Un anneau 50 en forme de tore à section droite quadrangulaire par exemple, est destiné à être enfilé avec ou sans jeu sur la tige 22 et à être interposé entre l'écrou 30 ou la rondelle intercalaire 31, et l'élément 10 qui lui fait face. Cet anneau 50 est fait en un matériau déformable et relativement élastique tel un élastomère de dureté Shore appropriée.

L'entretoise 40 et l'anneau 50 en élastomère sont fabriqués classiquement par moulage.

Dans l'exemple illustré, l'un des éléments 10 est en métal et est fabriqué par estampage. L'autre élément 10 est en plastique chargé notamment de fibres et est fabriqué par moulage.

La vis 20 et l'écrou 30 sont en tout matériau approprié par exemple en métal voire en plastique.

Tous les constituants d'un dispositif selon l'invention sont réunis, assemblés et montés comme cela ressort clairement de l'examen des figures du dessin, en particulier des figures 1 et 2.

Le dispositif selon l'invention occupe alors l'état où il est illustré sur la figure 1.

Si maintenant l'un des éléments est soumis à une sollicitation à la suite d'un effort qui présente une grande composante qui est pratiquement parallèle au plan de l'élément comme illustré par une flèche sur la figure 2, c'est-à-dire orthogonale à l'axe longitudinal de la tige de la vis, on voit que l'un des éléments aura tendance à "coulisser" relativement à l'autre de ces éléments tout en ayant aussi tendance à se rapprocher de ce dernier du fait de la longueur constante définie par la vis et l'écrou. Du fait de la présence simultanée de l'entretoise et de l'anneau, d'une part, et des portée et cuvette à configurations sphéroïdales complémentaires, d'autre part, associés à l'existence des jeux entre la tige de la vis et les passages transversant les deux éléments, la vis et son écrou vont pouvoir s'incliner relativement aux deux éléments qui restent pratiquement parallèles entre eux. L'entretoise et l'anneau se déforment par exemple par compression, écrasement, fluage ou autre au cours de ce déplacement, en restant ou non dans le domaine élastique.

Si la sollicitation a lieu avec une composante parallèle à l'axe longitudinal de la vis, l'un des éléments se rapproche de l'autre par compression de l'entretoise sans que l'anneau soit déformé.

Il est clair que ces deux types de sollicitations indiquées auparavant peuvent s'exercer simultanément.

Pour des raisons de facilité de montage, lorsqu'on utilise une cuvette oblongue comme illustré sur la figure 3, et une tête de vis qui lui est convenablement adaptée, la vis ne peut pas tourner selon son axe et il n'est donc pas nécessaire de la maintenir à l'aide d'un outil tel un tourne-vis, lors du serrage de l'écrou.

Comme illustré sur la figure 4, l'entretoise et l'anneau peuvent être réalisés d'un seul tenant sous forme d'un manchon 60 pourvu d'une gorge 61 destinée à chevaucher la tranche du passage dans lequel il est inséré.

Le dispositif selon l'invention convient particulièrement bien au cas où l'un des éléments est par exemple un pare-chocs ou bouclier notamment fait à partir d'une résine synthétique appropriée, une aile ou similaire, et l'autre des éléments est par exemple une coque ou structure métallique de véhicule. En effet lorsqu'on reste dans le domaine où les sollicitations auxquelles l'entretoise et l'anneau sont soumis, demeurent dans le domaine élastique l'élément qui a reçu un impact retrouve automatiquement sa position d'origine aussitôt que les sollicitations cessent.

On observera aussi que les choix adoptés pour la cuvette et pour la tête de vis permettent de "noyer" celle-ci dans l'élément sans qu'elle fasse saillie sur la face de l'élément et sans qu'il soit nécessaire d'établir des jeux importants et donc disgracieux, ce qui est favorable à la fois à l'aérodynamisme et à l'esthétique.

Ce qui précède met bien en lumière les particularités distinctives de l'invention, l'intérêt qu'elle offre et les avantages qu'elle procure.

## Revendications

1. Dispositif de fixation à au moins deux degrés de liberté notamment en translation selon deux directions orthogonales entre elles, pour réunir l'un à l'autre deux éléments (10) localement distants, qui comprend notamment deux passages (11) transperçant chacun l'un de ces éléments (10) d'une face (101) à l'autre (102) et dont l'un (11) est pourvu sur l'une (101) de ses faces (101, 102) d'une cuvette (111) avec un fond (1110) entourant ce passage (11), une vis (20) avec une tête (21) qui présente une portée (211) destinée à reposer sur le fond (1110) de la cuvette (111) et avec une tige (22) au moins partiellement filetée destinée à s'engager dans ces passages (11), un écrou (30) destiné à se visser sur la tige filetée (22) et à coopérer avec celui des éléments (10) opposé à celui pourvu de la cuvette (111), et une entretoise (40) avec un alésage (41) la transperçant destinée à s'enfiler sur la tige (22) et à s'insérer entre les deux éléments (10) pour les maintenir à distance, dispositif caractérisé en ce que ce fond (1110) et cette portée (211) ont des configurations sphéroïdales complémentaires, en ce que les passages (11) ont une taille supérieure à la taille de la tige (22) qui y est engagée mesurée selon au moins une direction perpendiculaire à l'axe longitudinal de la tige (22), en ce que l'entretoise (40) est faite en un matériau déformable et relativement élastique, et en ce qu'un anneau (50) fait en un matériau déformable et relativement élastique est destiné à être enfilé sur la tige (22) et à être interposé entre l'écrou (30) et l'élément (10) qui lui fait face.

2. Dispositif selon la revendication 1, caractérisé en ce que le fond (1110) est concave et la portée (211) est convexe.

3. Dispositif selon la revendication 1 ou 2, caractérisé en ce que l'entretoise (40) et l'anneau (50) sont d'un seul tenant et forment un manchon (60) pourvu d'une gorge (61) périphérique apte à chevaucher un passage (11) pour y être retenu.

4. Dispositif selon l'une quelconque des revendications 1 à 3, caractérisé en ce que les matériaux propres à l'entretoise (40) et à l'anneau (50) sont des substances synthétiques élastomères.

5. Dispositif selon l'une quelconque des revendications 1 à 4, caractérisé en ce que l'élément (10) pourvu sur l'une de ses faces de la cuvette (111) est muni sur sa face opposée d'un logement (112) apte à recevoir l'entretoise (40).

6. Application d'un dispositif selon l'une quelconque des revendications précédentes à un véhicule automobile terrestre où l'un des éléments est une pièce de carrosserie et l'autre des éléments une coque ou structure.
